# EUROPÄISCHE PATENTANMELDUNG

(11) **EP 1 215 433 A1**
(43) Veröffentlichungstag der Anmeldung: **19.06.2002**
(21) Anmeldenummer: 00811202.1
(22) Anmeldetag: 18.12.2000
(51) Int. Cl.: F16L 33/22

(54) **Kupplung mit einem Anschlussstück und einer Klemmhülse zum Anschliessen eines Rohrendes aus Kunststoff**

(71) Anmelder: JRG Gunzenhauser AG, 4450 Sissach (CH)
(72) Erfinder: Bürli, Kurt, 4463 Buus (CH)
(74) Vertreter: Heinen, Detlef

(57) **Zusammenfassung**

Die Kupplung zum Anschliessen eines Rohrs, vorzugsweise ein einschichtiges Kunststoffrohrs (**1**), besteht aus einem Anschlussstück (**2**) und einer Klemmhülse (**3**). Das Anschlussstück (**2**) hat zum Anschluss des Rohrendes (**10**) zumindest einen Ast mit einem Steckabschnitt (**25**) zum Aufschieben des Rohrendes (**10**). Das auf den Steckabschnitt (**25**) aufzuschiebende Rohrende (**10**) ist dicht von der auf dem Ast positionierten Klemmhülse (**3**) umspannt. Dem Steckabschnitt (**25**) ist eine dessen Aussendurchmesser überragende konische Aufweitzone (**26**) vorgelagert, die eine grössere lichte Weite als das Rohrende (**10**) besitzt und so das aufgeschobene Rohrende (**10**) aufweitet. Die Klemmhülse (**3**) ist auf dem Ast von einer hinteren, zur Aufweitzone (**26**) weiter entfernten *Ausgangsposition* axial in eine der Aufweitzone (**26**) näherliegende, vordere *Klemmposition* verschiebbar. Die Klemmhülse (**3**) weist einen Innenkonus auf, der sich mit zunehmender Entfernung von der Aufweitzone (**26**) verengt und das aufgeschobene Rohrende (**10**) auf den Steckabschnitt (**25**) drückt. Mit Annäherung der Klemmhülse (**3**) an die *Klemmposition* verkleinert sich der Abstand zwischen der Aufweitzone (**26**) und dem Innenkonus unter die Materialstärke des über die Aufweitzone (**26**) geschobenen Rohrendes (**10**). Hierdurch werden die Fixierung des angeschlossenen Rohrendes (**10**) in der Kupplung sowie die Abdichtung an zwei Dichtstellen bewirkt.

## Beschreibung

### Anwendungsgebiet der Erfindung

Die Erfindung bezieht sich auf eine Kupplung für eine im Prinzip unlösbare Rohrverbindung, wo ein Rohrende auf das Anschlussstück der Kupplung aufgeschoben und mittels einer Klemmhülse gesichert ist. Die Anschlussstücke weisen die gängigen Geometrien, wie gerade Kupplungsstücke, T-Stücke, Kreuzstücke, Winkelstücke verschiedener Abwinkelungen, eventuell auch Bögen verschiedener Krümmungen und Reduktionsmuffen, auf. Das Rohr muss eine gewisse Elastizität und im aufgeweiteten Zustand eine ausreichende Festigkeit besitzen. Vorzugsweise verwendet man einschichtiges Kunststoffrohr, z.B. aus vernetztem Polyethylen. Das Anschlussstück sowie die Klemmhülse der Kupplung bestehen vorzugsweise ebenfalls aus Kunststoff, so dass sich ein reines Kunststoffsystem mit allen Vorteilen aufbauen lässt. Derartige Systeme kommen insbesondere im Hauswassernetz für die Wasserversorgung, in Abwasserleitungen und für die Heizungsanlage zum Einsatz. Neben dem vorrangig durchgeleiteten Wasser ist die Rohrverbindung aber auch für andere Flüssigkeiten oder Gase geeignet.

### Stand der Technik

In der DE 38 19 729 A1 wird eine Rohrverbindung vorgeschlagen, wo zwischen zwei konisch aufgeweiteten Rohrenden ein mit Dichtlippen versehener Zwischenring eingefügt ist. Äusserlich beider Rohrenden werden die aufgeweiteten Partien von Spannflanschen radial hinterfasst, die axial aufeinander verspannt sind. Durch die zusammenziehende Verspannung beider Spannflansche schieben sich die Rohrenden partiell auf den Zwischenring, wobei sich die Dichtlippen plastisch verformen. Diese Rohrverbindung ist lediglich für Verlängerungen vorgesehen, d.h. für das Anfügen eines nächsten geraden oder abgebogenen Rohrs, nicht aber für das Einfügen eines Fittings. Überdies geschieht die Abdichtung nur zwischen dem aufgeweiteten Rohrende und Dichtlippen am Zwischenring, also an einer einzigen Stelle. Die Verbindung genügt daher nur sehr beschränkt den vielfältigen, typischen Verbindungsformen in Leitungsnetzen, z.B. lässt sich eine T-Abzweigung nicht herstellen, und die relativ schmale Abdichtfläche dürfte auch nicht allen Anforderungen gerecht werden.

Eine weitere Rohrverbindung ist aus dem Firmenprospekt "TECE*flex* - Das Universal-Installationssystem für Sanitär, Heizung und Sockelleistenheizung", 10.96, der Thermconcept GmbH & Co., Emsdetten/DE, bekannt. Das über einen Abschnitt zylindrisch aufgeweitete Rohrende ist auf den Stutzen eines Fittings, z.B. ein T-Stück, aufgesteckt. Am Stutzen ist eine Aussenprofilierung mit radial umlaufenden Zähnen vorgesehen, die der Abziehrichtung des Rohrs vom Fitting entgegenstehen. Ferner sind am Stutzen eine Anschlagschulter und eine hinter der Schulter liegende Hinterschneidung vorhanden. Nach dem Aufstecken des Rohrendes auf den Stutzen wird mit einer Presszange die vor dem Aufstecken auf das Rohr aufgeschobene Druckhülse über den auf dem Stutzen steckenden aufgeweiteten Rohrabschnitt geschoben. Das aufgeweitete Rohrende ist nun zwischen dem Stutzen und der Druckhülse eingepresst. Für diese Rohrverbindung benötigt man ein Aufweitwerkzeug sowie eine spezielle Presszange. Besonders nachteilig aber ist, dass bei Belastung der Rohrverbindung auf Zug allein die aufgepresste Druckhülse - abgesehen von der feingezahnten Aussenprofilierung am Stutzen - die wirkenden Längskräfte aufnehmen muss.

In der WO 94/18486 wird eine Verbindung zwischen dem Ende eines aufweitbaren Kunststoffrohrs und einem Verbindungsstück offenbart. Auf das Rohrende wird ein Hülsenstück aus speziellem Kunststoff geschoben, welches die Eigenschaft hat, sich nach vorheriger Dehnung innerhalb einiger Sekunden reversibel wieder zu verengen. Mit einem Aufweitwerkzeug wird das Rohrende zusammen mit dem Hülsenstück aufgeweitet, um es auf einen Stutzen des Verbindungsstücks bis zu einer Anschlagschulter aufschieben zu können. Durch die alsbald eintretende Verengung des Hülsenstücks umspannt dieses das aufgesteckte Rohrende wie eine Bride. Um die Festigkeit der Verbindung zu erhöhen, d.h. ein Abziehen des Rohrs vom Stutzen auszuschliessen, ist äusserlich auf dem Stutzen ein im Durchmesser vergrösserter radial umlaufender Flansch vorgesehen, welcher eine zahnförmige Kontur aufweist, die sich der Abzugsrichtung des Rohrs entgegenstellt.

Nachteilig bei dieser Verbindung sind folgende Aspekte:
- Die Hülsenstücke müssen aus einem speziellen Kunststoff bestehen, woraus sich höhere Kosten ergeben.
- Zum Aufweiten der Rohrenden mit samt dem aufgeschobenen Hülsenstück benötigt man ein relativ kompliziertes Aufweitwerkzeug, wobei für jede Rohrdimension das Aufweitwerkzeug mit einem entsprechend dimensionierten Dehnungskopf zu versehen ist.
- Unmittelbar nach dem Aufweiten des Rohrendes mit dem aufgeschobenen Hülsenstück muss das Aufstecken auf den Stutzen des Verbindungsstücks erfolgen, da innerhalb einiger Sekunden die reversible Verengung einsetzt.
- Beim Aufschieben des aufgeweiteten Rohrendes mit dem ebenfalls gedehnten Hülsenstück auf den Stutzen des Verbindungsstücks muss man letzteres von Hand gegenhalten, zumindest wenn sich dieses innerhalb einer längeren, frei hängenden Leitung befindet.

### Aufgabe der Erfindung

Angesichts der Unvollkommenheiten der vorbeschriebenen Rohrverbindung, liegt der Erfindung die Aufgabe zugrunde, eine Kupplung, bestehend aus einem Anschlussstück variabler Geometrie und einer Klemmhülse für eine Rohrverbindung zu schaffen, wo alle an der Verbindung beteiligten Teile aus Kunststoff sein können. Die Rohrverbindung muss korrosionsfest sein und sich auch für die Durchleitung von aggressiven Medienströmen sowie für die Unterputz-Verlegung eignen. Die zuverlässige Abdichtung über einen langen Zeitraum ist als Grunderfordernis zu garantieren. Auch bei einer eventuell auftretenden Zugbelastung am Leitungsrohr und der damit auf die Rohrverbindung einwirkenden Kraft muss die zuverlässige Abdichtung gewährleistet bleiben. Eine möglichst einfache Konstruktion der Kupplung mit dem Anschlussstück und der Klemmhülse ist anzustreben, so dass sich diese Teile rationell und kostengünstig fertigen lassen. Das Herstellen der Rohrverbindung soll durch die Konstruktion der Kupplungsteile auf montagefreundliche Weise und mit geringem Werkzeugaufwand geschehen.

### Übersicht über die Erfindung

Die Kupplung besteht aus einem Anschlussstück zum Anschliessen eines Rohrendes, vorzugsweise eines einschichtigen Kunststoffrohrs, und einer Klemmhülse. Das Anschlussstück hat zum Durchlass des Strömungsmediums zumindest einen Strömungsdurchgang und zum Anschluss des Rohrendes zumindest einen Ast mit einem Steckabschnitt zum Aufschieben des Rohrendes. Das auf den Steckabschnitt aufzuschiebende Rohrende wird dicht von der auf dem Ast positionierten Klemmhülse umspannt. Dem Steckabschnitt ist eine dessen Aussendurchmesser überragende Aufweitzone vorgelagert, die das freie Ende des Astes bildet, deren grösster Aussendurchmesser grösser als die lichte Weite des Rohrendes ist und so das aufgeschobene Rohrende aufweitet. Die Klemmhülse auf dem Ast ist von einer hinteren, zur Aufweitzone weiter entfernten *Ausgangsposition* axial in eine der Aufweitzone näherliegende, vordere *Klemmposition* verschiebbar. Die Klemmhülse hat einen Innenkonus, der sich mit zunehmender Entfernung von der Aufweitzone verengt und das aufzuschiebende Rohrende auf den Steckabschnitt drückt. Mit zunehmender Annäherung der Klemmhülse an die *Klemmposition* verringert sich der Abstand zwischen der Aufweitzone und dem Innenkonus unter die Materialstärke des über die Aufweitzone geschobenen Rohrendes.

Im weiteren werden Details bevorzugter Ausführungsvarianten der erfindungsgemässen Kupplung beschrieben:

Die Aufweitzone ist konisch ausgebildet, erweitert sich zum Steckabschnitt hin und fällt an ihrer maximalen Ausdehnung steil als hinterschnittene Hakenkontur auf das Niveau des Steckabschnitts ab. Am der Aufweitzone entgegengesetzten Ende des Steckabschnitts ist ein Rohranschlag in Form einer Ringschulter vorhanden. Hinter dem Rohranschlag liegt eine radial umlaufende Nut, an die sich ein gegenüber dem Steckabschnitt im Aussendurchmesser verdickter Basisabschnitt anschliesst. Der Basisabschnitt endet an einem Hülsenanschlag, der die Form einer Ringschulter hat. Hinter dem Hülsenanschlag ist eine radial umlaufende Rille vorgesehen, die dem Eingriff eines Kupplungsspanners einer Montagezange dient. Die Rille wird beidseits von je einem radial umlaufenden Flansch begrenzt, wobei der dem Basisabschnitt zugewandte Flansch auf der Seite des Basisabschnitt den Hülsenanschlag bildet.

Das Anschlussstück für eine gerade Kupplung hat zwei Äste, die zueinander axial und spiegelsymmetrisch angeordnet sind, zwischen denen für den Anschluss an beide Äste eine gemeinsam benutzbare Rille mit dem benachbarten Paar von Flanschen vorhanden ist. Für eine Kupplung in T- oder Kreuzform hat das Anschlussstück drei bzw. vier entsprechend zueinander stehende Äste, wobei jedem Ast ein Paar von Flanschen mit einem Hülsenanschlag und einer dazwischen liegenden Rille zugeordnet ist. Für eine winkel- oder bogenförmige Kupplung besitzt das Anschlussstück zwei zueinander entsprechend angeordnete Äste, wobei auch hier jeder Ast ein Paar von Flanschen mit einem Hülsenanschlag und einer dazwischen liegenden Rille aufweist. Zu jedem Ast des Anschlussstücks gehört eine Klemmhülse. Vorzugsweise bestehen das Anschlussstück und die Klemmhülsen aus dem gleichen Kunststoff.

Die Klemmhülse besteht aus einer Konuspartie mit dem Innenkonus und der abschliessenden Vorderkante sowie einer hinteren Rohrpartie mit der abschliessenden Hinterkante. Die Konuspartie kommt über dem Steckabschnitt zu liegen und die Rohrpartie greift in der vorgefahrenen *Klemmposition* wesentlich auf den Steckabschnitt über. Am Übergang von der Konuspartie zur Rohrpartie ist innerhalb der Klemmhülse eine radial umlaufende Rastkante ausgebildet, die über dem Steckabschnitt zu liegen kommt. Die Rastkante ist auf ihrem Kamm gemessen, gegenüber der lichten Weite der Rohrpartie eingeschnürt ist, erhebt sich also über das Niveau der Innenwandung der Rohrpartie und fällt steil hinterschnitten auf das Niveau der Innenwandung der Rohrpartie ab. Der verbleibende Zwischenraum zwischen der Rastkante und dem Niveau des Steckabschnitts ist geringer als die Wandstärke des aufgeschobenen Rohrendes, wodurch sich die Rastkante in das auf den Steckabschnitt aufgebrachte Rohrende nach Art eines Widerhakens einkrallt.

In der *Ausgangsposition* kommt die Klemmhülse mit ihrer Hinterkante am Hülsenanschlag zu liegen. Innerhalb der Rohrpartie sind Haltenocken vorgesehen, die in die Nut des Basisabschnitts eingreifen. Der Spalt zwischen der Hakenkontur der Aufweitzone des Anschlussstücks und dem Innenkonus der Konuspartie der Klemmhülse lässt Freiraum zum Einschieben des Rohrendes. In der *Klemmposition* ist die Klemmhülse mit ihrer Hinterkante vom Hülsenanschlag abgerückt und die Haltenocken mussten aus der Nut springen. Der Innenkonus drückt das eingeschobene Rohrende auf die Hakenkontur, wodurch hier eine erste Dichtstelle entsteht. Im Bereich der Rastkante presst der Innenkonus das Rohrende auf den Steckabschnitt, wodurch hier eine zweite Dichtstelle gebildet wird.

Die Haltenocken sitzen auf elastischen Zungen, welche durch Schlitze in der Wandung der Rohrpartie gebildet wurden, wobei die Nocken radial und komplementär zum Verlauf der Nut angeordnet sind. An jeder Klemmhülse sind zumindest zwei sich gegenüber liegende Zungen mit Haltenocken auf den Zungenspitzen vorhanden. Die Schlitze sind U-förmig gebildet, wobei sich die U-Form axial erstreckt und zur Hinterkante offen ist. Die Seitenschenkel der Schlitze beginnen in der Nähe der Hinterkante und erstrecken sich axial in der Rohrpartie, wobei die Schlitze nahe des Übergangs zwischen Rohrpartie und Konuspartie mit ihren radial verlaufenden Querschenkeln enden.

Die wesentlichen Vorteile der Kupplung für die Rohrverbindung in einem Vollkunststoffsystem sind:
- Korrosionsbeständigkeit von aussen und innerliche Resistenz gegen herkömmlich aggressive Medienströme;
- problemlose Unterputz-Verlegung;
- kostengünstige und rationelle Fertigung der Kupplungsteile;
- gleicher Wärmeausdehnungskoeffizient des Anschlussstücks und der Klemmhülse;
- effizientes Herstellen der Rohrverbindung unter lokalen Montagebedingungen;
- die Strömungsgeschwindigkeit des zu transportierenden Mediums kann erhöht werden; und
- bei Beanspruchung der Rohrverbindung durch Zugkräfte verstärkt sich die Flächenpressung für die Abdichtung.

### Kurzbeschreibung der beigefügten Zeichnungen

Es zeigen:
- Figur 1 -: ein Ende eines einschichtigen Rohrs im Längsschnitt;
- Figur 2A -: ein gerades Anschlussstück als Perspektivdarstellung;
- Figur 2B -: eine komplette Kupplung mit dem Anschlussstück gemäss Figur 2A und den auf beiden Ästen des Anschlussstücks aufgeschobenen Klemmhülsen in der *Ausgangsposition* als Frontansicht;
- Figur 2C -: die Kupplung gemäss Figur 2B im Längsschnitt;
- Figur 2D -: den linke Ast der Kupplung gemäss Figur 2C vergrössert;

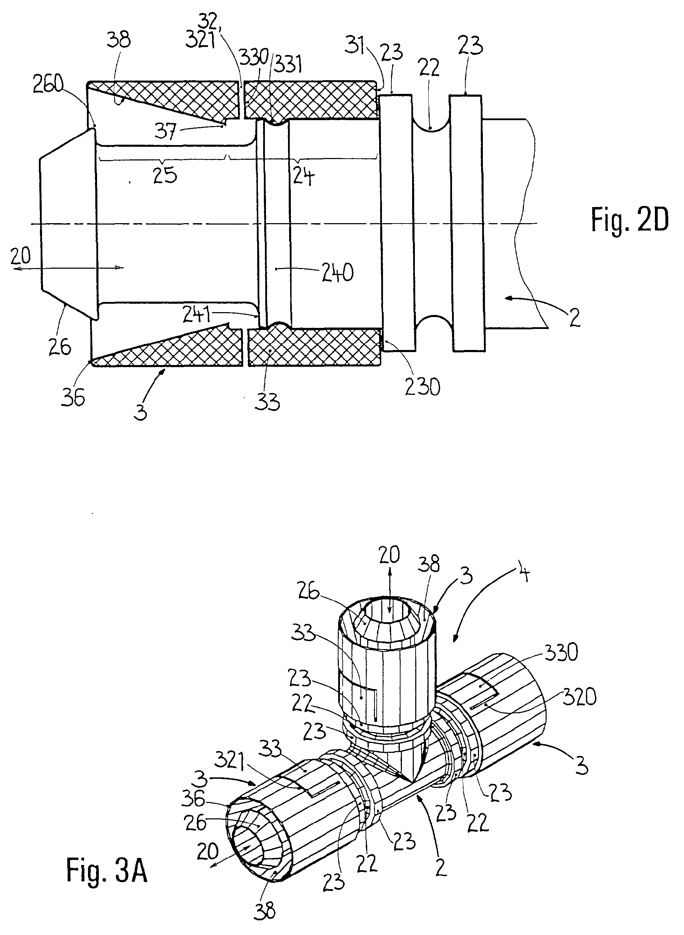

- Figur 3A -: eine komplette Kupplung mit einem T-förmigen Anschlussstück und auf den drei Ästen aufgeschobenen Klemmhülsen in der *Ausgangsposition* als Perspektivdarstellung;

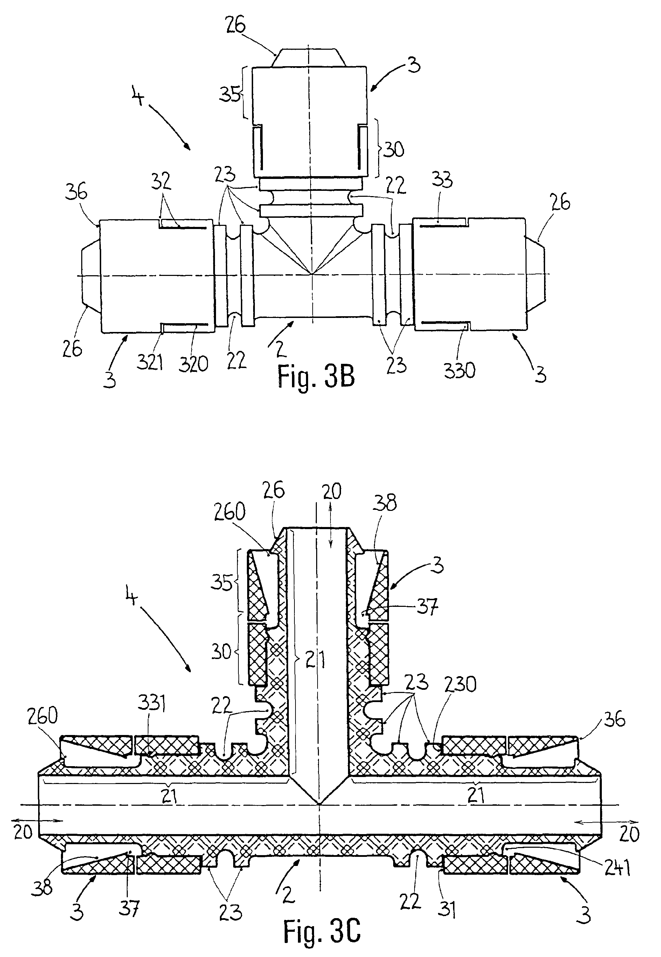

- Figur 3B -: die Kupplung gemäss Figur 3A als Frontansicht;
- Figur 3C -: die Kupplung gemäss Figur 3B im Längsschnitt;
- Figurenfolge 4A bis 4D -: die Funktionsweise der Rohrverbindung;

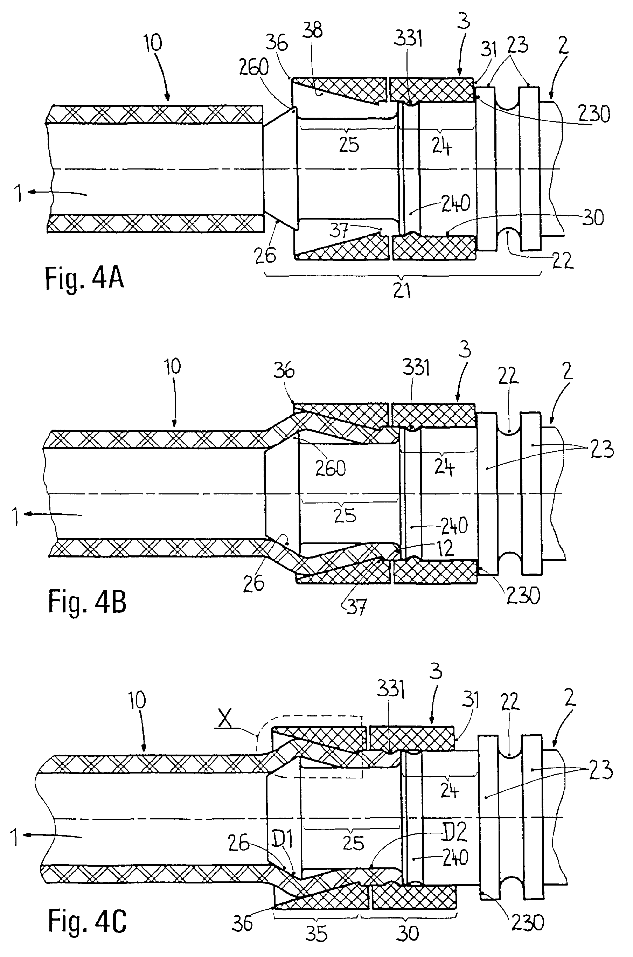

- Figur 4A -: die Annäherung des Rohrendes gemäss Figur 1 an den Stutzen eines Astes einer Kupplung im Teilschnitt;
- Figur 4B -: das auf den Stutzen aus Figur 4A aufgeschobene Rohrende mit der Klemmhülse weiterhin in der *Ausgangsposition*;
- Figur 4C -: die Darstellung gemäss Figur 4B mit vorgerückter Klemmhülse in *Klemmposition*;
- Figur 4D -: das Detail X aus Figur 4C vergrössert;
- Figur 4E -: die Beanspruchung der Rohrverbindung auf Zug;
- Figur 5 -: eine Montagezange zur Herstellung der Rohrverbindung als Prinzipdarstellung;
- Figurenfolge 6A bis 6C -: die Herstellung der Rohrverbindung;

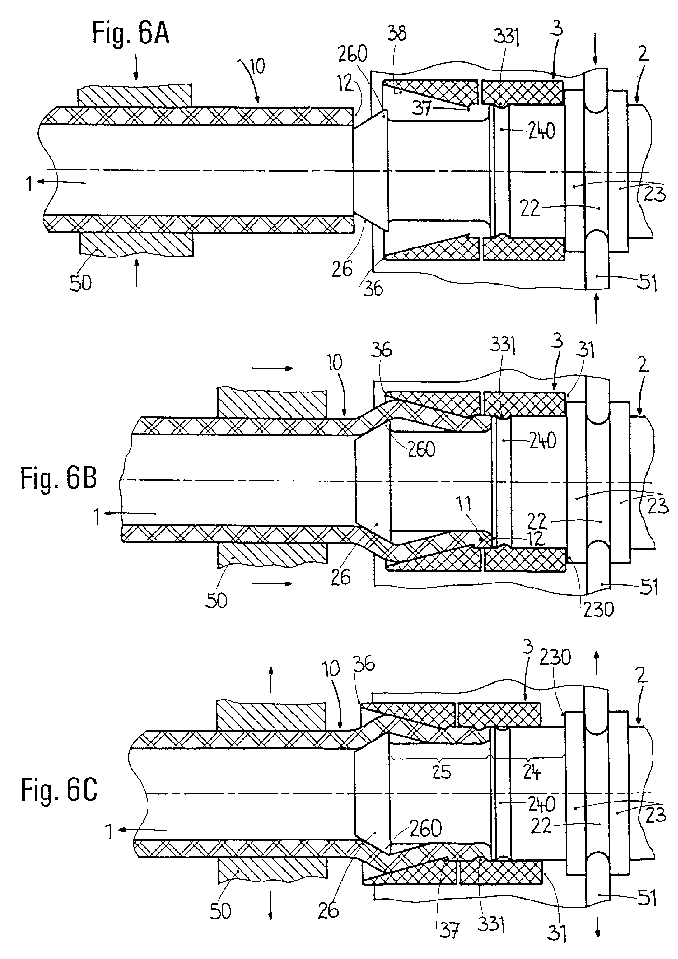

- Figur 6A -: das Einspannen von Rohrende und Kupplung für das Aufschieben des Rohrendes auf den Stutzen, entsprechend der Situation nach Figur 4A;
- Figur 6B -: das eingespannte Rohrende ist bis zum Anschlag auf den Stutzen der ebenfalls gespannten Kupplung aufgeschoben und die Klemmhülse befindet sich in der *Ausgangsposition* entsprechend der Situation nach Figur 4B und
- Figur 6C -: bei eingespanntem Rohrende und eingespannter Kupplung wird die Klemmhülse (entsprechend der Situation nach Figur 4C) in die *Klemmposition* gebracht.

### Ausführungsbeispiel

Mit Bezug auf die beiliegenden Zeichnungen erfolgt nachstehend die detaillierte Beschreibung eines bevorzugten Ausführungsbeispiels zur erfindungsgemässen Kupplung. Abschliessend werden mögliche Modifikationen erwähnt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1

Die zu erstellende Rohrverbindung wird mit dem Rohrende **10** eines zumeist einschichtigen Rohrs **1** hergestellt, das vorzugsweise aus Kunststoff, z.B. vernetztem Polyethylen, besteht. Neben den grundsätzlichen Anforderungen für das Rohrmaterial ist massgeblich, dass es wegen der beim Herstellen der Rohrverbindung erfolgenden aufweitenden Verformung des Rohrendes **10** nicht spröde ist, sondern eine gewisse Elastizität aufweist. Am Rohrende **10** werden die Abschlusskante **11** und die Schnittfläche **12** definiert, wobei die Abschlusskante **11** die letzten Millimeter vor der Schnittfläche **12** umfasst. Das Rohr **1** hat z.B. einen Aussendurchmesser von 12 mm, 16 mm oder 20 mm.

### Figur 2A

Das Anschlussstück **2 -** hier in gerader, rohrförmiger Ausbildung mit einem axialen Strömungsdurchgang **20** - ist Hauptbestandteil der gesamten Kupplung. Von seiner axialen Mitte aus betrachtet, ist dieses Anschlussstück **2** spiegelsymmetrisch mit zwei Ästen **21** aufgebaut. In der Mitte befindet sich eine radial umlaufende Rille **22**, welche von zwei zueinander beabstandeten, radial umlaufenden Flanschen **23** eingeschlossen wird. Den Flanschen **23** jeweils in entgegengesetzter Richtung vorgelagert ist ein zylindrischer Basisabschnitt **24**, welcher gegenüber den Flanschen **23** einen verringerten Aussendurchmesser aufweist, so dass am Übergang zwischen dem Basisabschnitt **24** und dem angrenzenden Flansch **23** ein Hülsenanschlag **230** in Form einer Ringschulter entsteht. Nahe der Vorderkante des Basisabschnitts **24** - dem zugehörigen Flansch **23** entgegengesetzt - befindet sich eine radial umlaufende Nut **240**. Dem Basisabschnitt **24** wiederum vorgelagert liegt ein zylindrischer Steckabschnitt **25** mit gegenüber dem Basisabschnitt **24** erneut reduziertem Aussendurchmesser, so dass am Übergang zwischen Steckabschnitt **25** und Basisabschnitt **24** ein Rohranschlag **241** in Form einer Ringschulter entsteht. Am freien Ende des Steckabschnitts **25** liegt eine konische Aufweitzone **26**, die sich in Richtung des Steckabschnitts **25** erweitert und zwar über seinen Aussendurchmesser hinaus. An der maximalen Ausdehnung der Aufweitzone **26** fällt diese steil als hinterschnittene Hakenkontur **260** auf das Niveau des Steckabschnitts **25** ab.

### Figuren 2B bis 2D

An der kompletten Kupplung **4** befindet sich im montagebereiten Zustand auf jedem der beiden Äste **21** des Anschlussstücks **2** eine den Basisabschnitt **24** und den Steckabschnitt **25** umgreifende zylindrische Klemmhülse **3**. Die Klemmhülse **3** mit der Form eines Rohrabschnitts besteht aus einer hinteren Rohrpartie **30**, die mit der Hinterkante **31** abschliesst, und einer vorderen Konuspartie **35,** die mit der Vorderkante **36** abschliesst. In der Rohrpartie **30** sind U-förmige Schlitze **32** vorhanden, wobei die U-Form sich axial erstreckt und zur Hinterkante **31** offen ist. Hierdurch entstehen radial elastische Zungen **33** mit frei federnden Zungenspitzen **330**. Vorzugsweise sind zwei sich diametral gegenüber liegende Zungen **33** vorgesehen. Die Seitenschenkel **320** der Schlitze **32** beginnen in der Nähe der Hinterkante **31** und erstrecken sich axial in der Rohrpartie **30**. Mit ihren radial orientierten Querschenkeln **321** enden die Schlitze **32** nahe des Übergangs zwischen Rohrpartie **30** und Konuspartie **35**. An der Innenwandung der Rohrpartie **30** weist jede Zungenspitze **330** eine erhabene, parallel zu den Querschenkeln **321** und somit radial verlaufende Haltenocke **331** auf.

Von der Aussenseite der zylindrischen Klemmhülse **3** ist der Übergang zwischen der Rohrpartie **30** und der Konuspartie **35** nur durch die Querschenkel **321** der hier endenden Schlitze **32** lokalisierbar. Innerhalb liegt an diesem Übergang eine radial umlaufende Rastkante **37**, die auf ihrem Kamm gemessen, über die lichte Weite der Rohrpartie **30** nach innen hinausragt - sich also über das Niveau der Innenwandung der Rohrpartie **30** erhebt - und steil hinterschnitten auf das Niveau der Innenwandung der Rohrpartie **30** abfällt. Von der Rastkante **37** beginnend vergrössert sich die lichte Weite der Konuspartie **35** konisch hin zur Vorderkante **36**, so dass ein sich nach aussen öffnender Innenkonus **38** entsteht. Je nach Bedarf kann dieser Innenkonus **38** auch mit einer Zahnung oder sonstigen Sicherungsorganen versehen sein.

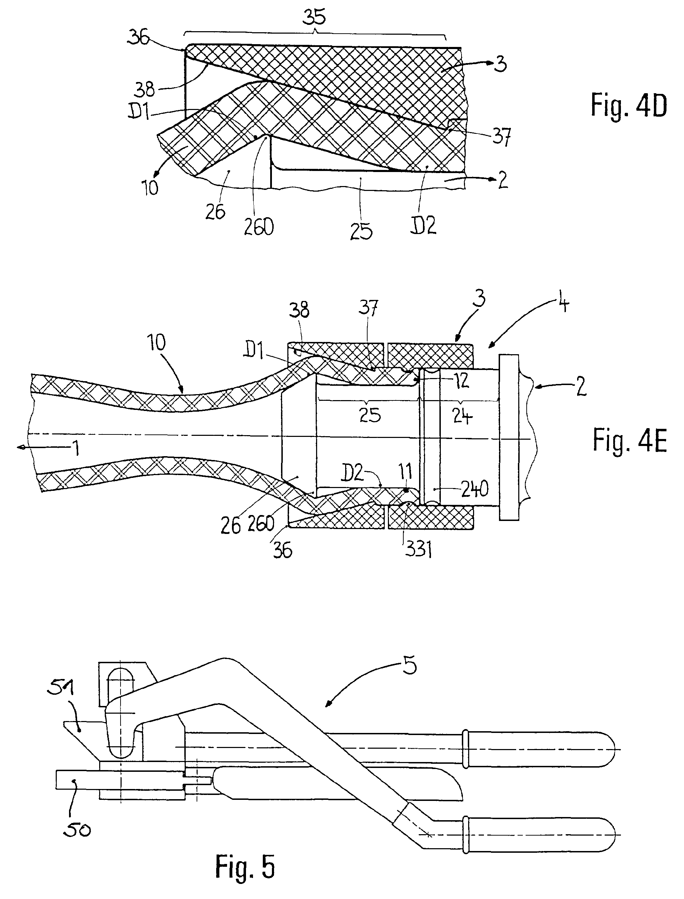

In der dargestellten *Ausgangsposition*, welche dem Zustand der fabrikseitigen Auslieferung entspricht, liegt die Klemmhülse **3** mit ihrer Hinterkante **31** am Hülsenanschlag **230** und die Haltenocken **331** auf den elastischen Zungenspitzen **330** sitzen in der Nut **240** des Basisabschnitts **24**. Der Steckabschnitt **25** wird mit radialem Abstand von der Konuspartie **35** mit ihrem Innenkonus **38** umgeben, wobei die Vorderkante **36** der Konuspartie **35** etwa bis in die Ebene der Hakenkontur **260** der Aufweitzone **26** des Anschlussstücks **2** reicht und die Rastkante **37** der Konuspartie **35** der Klemmhülse **3** in hinteren Viertel der Steckabschnitts **25** zu liegen kommt. Bei der gezeigten Kupplung **4** mit geradem Anschlussstück **2** wird die in der axialen Mitte vorhandene Rille **22** für die Montage an beiden Ästen **21**, d.h. zum Eingriff für die Montagezange **5** (s. Figur 5) benutzt.

### Figuren 3A bis 3C

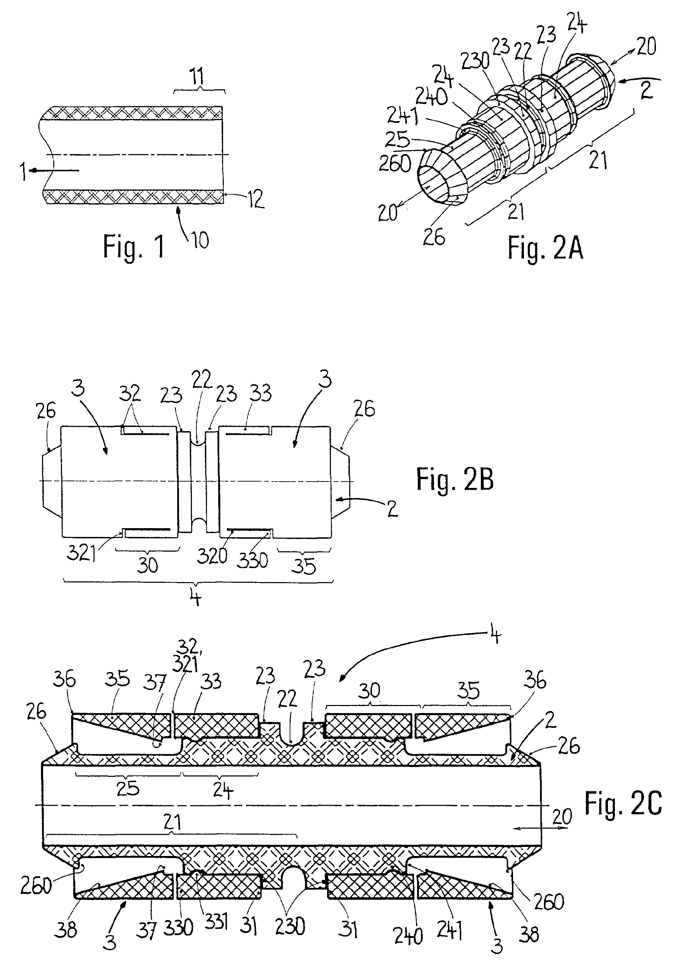

Diese Kupplung **4** besitzt ein Anschlussstück **2** mit drei T-förmig zueinander angeordneten Ästen **21** auf denen jeweils eine Klemmhülse **3** aufgesteckt ist. Je nachdem wie die Äste **21** als Zu- ober Abfluss beaufschlagt sind, ergibt sich zumindest ein abgewinkelter Strömungsdurchgang **20**, neben einem möglichen axialen Strömungsdurchgang **20**. Die Äste **21** des Anschlussstücks **2** mit den Basisabschnitten **24**, den Steckabschnitten **25** und den Aufweitzonen **26** sind wie bei den Figuren 2A bis 2D beschaffen, so dass darauf verwiesen wird. Unverändert sind auch die Klemmhülsen **3**. Eine Abweichung besteht nur insoweit, als am hier gezeigten T-förmigen Anschlussstück **2** jeder Ast **21** hinter dem Basisabschnitt **24** ein eigenes Paar von zueinander beabstandeten, radial umlaufenden Flanschen **23** aufweist, die zwischen sich eine Rille **22** bilden.

### Figur 5

Die Montagezange **5** ist als Gegenstand einer separaten Patentanmeldung vorgesehen, so dass hier nur der unmittelbare Angriff am Rohrende **10** bzw. an der Kupplung **4** Erwähnung findet. Zum Einspannen des auf den Steckabschnitt **25** am Anschlussstück **2** aufzuschiebenden Rohrendes **10** weist die Montagezange **5** einen Rohrspanner **50** auf. Für den Eingriff in die Rille **22** am Anschlussstück **2** besitzt die Montagezange **5** ferner einen Kupplungsspanner **51**. Bei einem Arbeitshub der an das Rohrende **10** und die Kupplung **4** angesetzten Montagezange **5** werden der Rohrspanner **50** und der Kupplungsspanner **51** aufeinander zu bewegt. Der Arbeitshub der Montagezange **5** kann abschliessend - d.h. vor dem Öffnen - den Vorschub der Klemmhülse **3** von der *Ausgangsposition* in die *Klemmposition* beinhalten.

### Figuren 4A und 6A

Die Herstellung der Rohrverbindung beginnt mit dem axialen Heranführen des Rohrendes **10** an die Konusspitze **26** des Astes **21**, an dem der Anschluss erfolgen soll. Zur Zentrierung des Rohrendes **10** ist es praktisch, wenn die lichte Weite des Rohrs **1** und die Dimensionierung der Aufweitzone **26** das ansatzweise Aufstecken des Rohrendes **10** auf die Aufweitzone **26** erlaubt. Die Klemmhülse **3** befindet sich in der Ausgangsposition, d.h. die Hinterkante **31** der Rohrpartie **30** liegt am Hülsenanschlag **230** an. Beim Ansetzen der Montagezange **5** umfassen deren Rohrspanner **50** im ERSTEN TAKT des Arbeitshubes das Rohrende **10** und der Kupplungsspanner **51** der Montagezange **5** greift zwischen die beiden Flansche **23** in die Rille **22** ein.

### Figur 4B und 6B

Führt man mit der Montagezange **5** den ZWEITEN TAKT des Arbeitshubes aus, so nähern sich der Rohrspanner **50** und der Kupplungsspanner **51** zueinander an, worauf das Rohrende **10** zunächst über die Aufweitzone **26** und dann über den gesamten Steckabschnitt **25** gezwungen wird. An der Konusspitze **26** wird das Rohrende **10** aufgeweitet und anschliessend vom Innenkonus **38** sukzessive auf die Oberfläche des Steckabschnitts **25** gedrückt. Die Abschlusskante **11** des Rohrendes **10** quetscht sich hinter die Rastkante **37**, bis die Schnittfläche **12** des Rohrendes **10** am Rohranschlag **241** anstösst. Die Klemmhülse **3** ruht noch in der *Ausgangsposition.*

### Figuren 4C, 4D und 6C

Im DRITTEN TAKT des Arbeitshubes wird die Klemmhülse **3** von der *Ausgangsposition* in die *Klemmposition* vorbewegt. Hierbei öffnen sich die Zungen **33** und die Haltenocken **331** springen aus der Nut **240** heraus und kommen neu auf der Abschlusskante **11** des Rohrendes **10** dort zu liegen, wo zuvor die Rastkante **37** eine Einkerbung im Rohrmaterial markierte. Mit dem Vorschieben der Klemmhülse **3** verengt sich über der Hakenkontur **260** der Konusspitze **26** der bisherige Freiraum durch den sukzessive sich verengenden Innenkonus **38.** In der *Klemmposition* ist die Klemmhülse **3** maximal nach vorn bewegt, wobei hier der Innenkonus **38** das Rohrende **10** auf die Hakenkontur **260** der Konusspitze **26** presst. Zugleich hat sich die Rastkante **37** der Klemmhülse **3** in Richtung des Rohrs **1** vorgeschoben und gräbt sich der Abschlusskante **11** vorgelagert neu ein, so dass die Klemmhülse **3** und das Rohrende **10** in ihrer Lage fixiert sind. In der *Klemmposition* hat die Vorderkante **36** der Klemmhülse **3** etwa das vordere, freie Ende der Konusspitze **26** erreicht. Der durch die Klemmhülse **3** bewirkte Anpressdruck auf das Rohrende **10** ergibt eine erste Dichtstelle **D1** auf der Konusspitze **26** und eine zweite Dichtstelle **D2** auf dem hinteren Teil des Steckabschnitts **25**.

Der VIERTE TAKT des Arbeitshubes umfasst das Öffnen des Rohrspanners **50** und des Kupplungsspanners **51** der Montagezange **5** sowie das Entfernen der Montagezange **5** von der jetzt fertiggestellten Rohrverbindung.

### Figur 4E

Wirkt auf das Rohr **1** eine axiale Zugkraft von der Kupplung **4** weg, so wird durch die Reibung zwischen dem Rohrende **10** und der Klemmhülse **3** sowie insbesondere durch den verankernden Eingriff der Rastkante **37** in das Rohrende **10** die Klemmhülse **3** minim weiter in Richtung der Klemmposition vorgezogen. Dies hat eine weitere Verengung des Ringspalts zwischen der Hakenkontur **260** und dem Innenkonus **38** an der Klemmhülse **3** zur Folge, so dass an der ersten Dichtstelle **D1** der Anpressdruck, mit dem das Rohrende **10** auf die Hakenkontur **260** gedrückt wird, anwächst. Zugleich wird das Rohrende **10** hinter der Hakenkontur **260** durch den vorfahrenden Innenkonus **38** und die Rastkante **37** zu einer zunehmenden, scharfkantigen Abwinkelung gezwungen, so dass mit steigender Anpressung die Abdichtung auch an der zweiten Dichtstelle **D2** intensiviert wird. Bei weiter sich vergrössernder Zugkraft wird, mit stetig wachsenden Anpressdrücken an beiden Dichtstellen **D1,D2** in der Rohrverbindung, das Rohr **1** gestreckt und eine Einschnürung einsetzen.

Sollte auf das Rohr **1** eine axiale Kraft in Richtung der Kupplung **4** einwirken, so wird Rohrmaterial in die beiden Dichtstellen **D1,D2** hineingepresst, was ebenfalls eine Erhöhung der Abdichtung zur Folge hat.

Als mögliche konstruktive Modifikationen seien noch ausdrücklich erwähnt:
- Zur zusätzlichen Sicherung der Klemmhülse **3** in der *Klemmposition* kann man auf dem Basisabschnitt **24** des Anschlussstücks **2** und/oder innerlich der Rohrpartie **30** der Klemmhülse 3 Oberflächenstrukturen - z.B. Raster, Verzahnungen oder Noppen - vorsehen, die einem Zurückgleiten der Klemmhülse **3** in die *Ausgangsposition*, hin zum Hülsenanschlag **230,** entgegenwirken.
- Das Vorschieben der Klemmhülse **3** aus der *Ausgangsposition* in die *Klemmposition* geschieht vorzugsweise durch einen Arbeitshub mit der Montagezange **5,** welcher dem Aufschieben des Rohrendes **10** auf den Steckabschnitt **25** des Anschlussstücks **2** folgt. Das Vorschieben könnte aber auch durch eine Feder erfolgen, die man während der Montage einbringt. Ist die Feder bereits fabrikmässig zwischen dem Flansch **23** und der Rohrpartie **30** angeordnet, befindet sich die Klemmhülse **3** ständig in der *Klemmposition* und müsste während dem Aufschieben des Rohrendes **10** auf den Steckabschnitt **25** in Richtung des Hülsenanschlags **230** geschoben werden, um den nötigen Freiraum zu schaffen. Nach dem Lösen der Montagezange **5** bringt die Feder die Klemmhülse **3** wieder in die *Klemmposition.*
- Im DRITTEN TAKT des Arbeitshubes kann man anstelle die Klemmhülse **3** von der *Ausgangsposition* in die *Klemmposition* vorzuschieben auch mittels der Montagezange **5** das vom Rohrspanner **50** ergriffene Rohrende **10** um einen definierten Weg von der Kupplung **4** wegziehen. Durch den widerhakenförmigen Eingriff der Rastkante **37** in das Rohrmaterial - unterstützt durch die Reibung zwischen der Oberfläche des Rohrendes **10** und der Innenfläche der Klemmhülse **3** - wird mit dem Vorziehen des Rohrs **1** die Klemmhülse **3** mitgeschleppt. Durch Spaltverengung presst der Innenkonus **38** der Klemmhülse **3** das Rohrende **10** intensiver auf die Hakenkontur **260** der Konusspitze **26**.
- Soll vorteilhaft das gesamte Leitungsnetz komplett nur aus Kunststoff bestehen, sind sowohl das Rohr **1** als auch die Teile der Kupplung **4** - d.h. das Anschlussstück **2** und die Klemmhülse **3** aus Kunststoff. Ansonsten könnte das Anschlussstück **2** und/oder die Klemmhülse **3** aus Keramik, Metall oder einer metallischen Legierung gefertigt werden.

## Patentansprüche

1. Rohrkupplung **(4)** mit einem Anschlussstück **(2)** und einer Klemmhülse **(3)** zum Anschliessen des Rohrendes **(10)** eines vorzugsweise einschichtigen Kunststoffrohrs **(1)**, wobei:
a) das Anschlussstück **(2)** zum Durchlass des Strömungsmediums zumindest einen Strömungsdurchgang **(20)** und zum Anschluss des Rohrendes **(10)** zumindest einen Ast **(21)** mit einem Steckabschnitt **(25)** zum Aufschieben des Rohrendes **(10)** besitzt; und
b) der Steckabschnitt **(25)** eine auf dem Ast **(21)** positionierte Klemmhülse **(3)** aufweist, um das auf dem Steckabschnitt **(25)** aufgeschobene Rohrende **(10)** dichtend zu umspannen, **dadurch gekennzeichnet, dass**
c) dem Steckabschnitt **(25)** eine dessen Aussendurchmesser teilweise überragende konische Aufweitzone **(26)** vorgelagert ist, die das freie Ende des Astes **(21)** bildet und deren grösster Aussendurchmesser grösser als die lichte Weite des Rohrendes **(10)** ist, um so das aufzuschiebende Rohrende **(10)** zur Aufweitung zu zwingen, und dass ferner
d) die Klemmhülse **(3)** auf dem Ast **(21)** von einer hinteren, von der Aufweitzone **(26)** weiter entfernten *Ausgangsposition* (Fig. 2C) axial in eine der Aufweitzone **(26)** näherliegende, vordere *Klemmposition* (Fig. 4B bis 4E) verschiebbar ist.

2. Rohrkupplung nach Anspruch 1, **dadurch gekennzeichnet, dass** die Klemmhülse **(3)** einen Innenkonus **(38)** besitzt, der sich mit zunehmender Entfernung von der Aufweitzone **(26)** verengt, um das aufzuschiebende Rohrende **(10)** auf den Steckabschnitt **(25)** zu zwingen, das Ganze derart, dass sich mit zunehmender Annäherung der Klemmhülse **(3)** an die *Klemmposition* der Abstand zwischen der Aufweitzone **(26)** und dem Innenkonus **(38)** unter die Materialstärke des über die Aufweitzone **(26)** zu schiebenden Rohrendes **(10)** verringert.

3. Rohrkupplung nach Anspruch 1, **dadurch gekennzeichnet, dass**
a) die Aufweitzone **(26)** konisch ausgebildet ist, sich zum Steckabschnitt **(25)** hin erweitert und an ihrer maximalen Ausdehnung als hinterschnittene Hakenkontur **(260)** in Richtung des Steckabschnitts **(25)** abfällt;
b) am der Aufweitzone **(26)** entgegengesetzten Ende des Steckabschnitts **(25)** ein Rohranschlag **(241)** in Form einer Ringschulter vorgesehen ist;
c) hinter dem Rohranschlag **(241)** eine radial umlaufende Nut **(240)** liegt, an die sich ein gegenüber dem Steckabschnitt **(25)** im Aussendurchmesser verdickter Basisabschnitt **(24)** anschliesst; und
d) der Basisabschnitt **(24)** an einem Hülsenanschlag **(230)** in Form einer Ringschulter endet.

4. Rohrkupplung nach Anspruch 3, **dadurch gekennzeichnet, dass**
a) hinter dem Hülsenanschlag **(230)** eine radial umlaufende Rille **(22)** vorgesehen ist, die dem Eingriff eines Kupplungsspanners **(51)** einer Montagezange **(5)** dient;
b) die Rille **(22)** beidseits von je einem radial umlaufenden Flansch **(23)** begrenzt wird; und
c) der dem Basisabschnitt **(24)** zugewandte Flansch **(23)** auf der Seite des Basisabschnitt **(24)** den Hülsenanschlag **(230)** bildet.

5. Rohrkupplung nach einem der Ansprüche 1 bis 4, **dadurch gekennzeichnet, dass**
a) das Anschlussstück **(2)** für eine gerade Kupplung **(4)** zwei Äste **(21)** aufweist, die zueinander axial und spiegelsymmetrisch angeordnet sind, zwischen denen für den Anschluss an beide Äste **(21)** eine gemeinsam benutzbare Rille **(22)** mit dem benachbarten Paar von Flanschen **(23)** vorhanden ist; oder
b) das Anschlussstück **(2)** für eine Kupplung **(4)** in T- oder Kreuzform drei bzw. vier entsprechend zueinander stehende Äste **(21)** aufweist, wobei jedem Ast **(21)** ein Paar von Flanschen **(23)** mit einem Hülsenanschlag **(230)** und einer dazwischen liegenden Rille **(22)** zugeordnet ist; oder
c) das Anschlussstück **(2)** für eine winkel- oder bogenförmige Kupplung **(4)** zwei zueinander entsprechend angeordnete Äste **(21)** aufweist, wobei jedem Ast **(21)** ein Paar von Flanschen **(23)** mit einem Hülsenanschlag **(230)** und einer dazwischen liegenden Rille **(22)** zugeordnet ist;
d) jedem Ast **(21)** des Anschlussstücks **(2)** eine Klemmhülse **(3)** zugeordnet ist; und
e) das Anschlussstück **(2)** vorzugsweise aus demselben Kunststoff besteht, der für die Klemmhülsen **(3)** Verwendung findet oder zumindest annähernd den gleichen Wärmeausdehnungskoeffizienten besitzt.

6. Rohrkupplung nach Anspruch 1, **dadurch gekennzeichnet, dass**
a) die Klemmhülse **(3)** aus einer Konuspartie **(35)** mit dem Innenkonus **(38)** und der abschliessenden Vorderkante **(36)** sowie einer hinteren Rohrpartie **(30)** mit der abschliessenden Hinterkante **(31)** besteht;
b) die Konuspartie **(35)** über dem Steckabschnitt **(25)** zu liegen kommt und die Rohrpartie **(30)** in der vorgefahrenen *Klemmposition* wesentlich auf den Steckabschnitt **(25)** übergreift; und
c) am Übergang von der Konuspartie **(35)** zur Rohrpartie **(30)** innerhalb der Klemmhülse **(3)** eine radial umlaufende Rastkante **(37)** vorhanden ist, die über dem Steckabschnitt **(25)** zu liegen kommt.

7. Rohrkupplung nach Anspruch 6, **dadurch gekennzeichnet, dass**
a) die Rastkante **(37)** auf ihrem Kamm gemessen, gegenüber der lichten Weite der Rohrpartie **(30)** nach innen herausragt und sich damit über das Niveau der Innenwandung der Rohrpartie **(30)** erhebt und vorzugsweise steil hinterschnitten auf das Niveau der Innenwandung der Rohrpartie **(30)** abfällt; und
b) der zwischen der Rastkante **(37)** und dem Niveau des Steckabschnitts **(25)** verbleibende Zwischenraum vorzugsweise geringer ist als die Wandstärke des aufzuschiebenden Rohrendes **(10)**, wodurch sich die Rastkante **(37)** in das auf den Steckabschnitt **(25)** aufgebrachte Rohrende **(10)** in der Art eines Widerhakens verankert.

8. Rohrkupplung nach Anspruch 3 und 6, **dadurch gekennzeichnet, dass**
a) die Klemmhülse **(3)** in der *Ausgangsposition*
aa) mit ihrer Hinterkante **(31)** am Hülsenanschlag **(230)** zu liegen kommt;
ab) innerlich der Rohrpartie **(30)** Haltenocken **(331)** vorgesehen sind, die in der Nut **(240)** des Basisabschnitts **(24)** eingreifen;
ac) der Spalt zwischen der Hakenkontur **(260)** der Spitze **(26)** des Anschlussstücks **(2)** und dem Innenkonus **(38)** der Konuspartie **(35)** der Klemmhülse **(3)** Freiraum zum Einschieben des Rohrendes **(10)** lässt; und
b) die Klemmhülse **(3)** in der *Klemmposition*
ba) mit ihrer Hinterkante **(31)** vom Hülsenanschlag **(230)** vorgerückt ist;
bb) die Haltenocken **(331)** aus der Nut **(240)** geglitten sind;
bc) der Innenkonus **(38)** das einzuschiebende Rohrende **(10)** gegen die Hakenkontur **(260)** presst, wodurch hier eine erste Dichtstelle **(D1)** gebildet wird; und
bd) der Innenkonus **(38)** im Bereich der Rastkante **(37)** das einzuschiebende Rohrende **(10)** auf den Steckabschnitt **(25)** presst, wodurch hier eine zweite Dichtstelle **(D2)** gebildet wird.

9. Rohrkupplung nach Anspruch 8, **dadurch gekennzeichnet, dass** die Haltenocken **(331)**
a) auf elastischen Zungen **(33)** angeordnet sind, welche durch Schlitze **(32,320,321)** in der Wandung der Rohrpartie **(30)** entstehen; und
b) radial, komplementär zum Verlauf der Nut **(24)** ausgerichtet sind.

10. Rohrkupplung nach Anspruch 9, **dadurch gekennzeichnet, dass**
a) an jeder Klemmhülse **(3)** zumindest eine Zunge **(33)** mit Haltenocken **(331)** auf jeder Zungenspitze **(330)** vorhanden ist;
b) ein Schlitz **(32,320,321)** U-förmig gebildet ist, wobei sich die U-Form axial erstreckt und zur Hinterkante **(31)** offen ist;
c) die Seitenschenkel **(320)** des Schlitzes **(32)** in der Nähe der Hinterkante **(31)** einsetzen und sich axial in der Rohrpartie **(30)** erstrecken, wobei der Schlitz **(32)** nahe des Übergangs zwischen Rohrpartie **(30)** und Konuspartie **(35)** mit seinen radial ausgerichteten Querschenkeln **(321)** endet.
